# EUROPEAN PATENT APPLICATION

(11) **EP 0 916 382 A1**
(43) Date of publication of application: **19.05.1999**
(21) Application number: 98203837.4
(22) Date of filing: 13.11.1998
(51) Int. Cl.: B01D 47/02, B01D 53/18, B08B 15/00, B01D 50/00

(54) **Device and method for purifying contaminated gas**

(30) Priority: 13.11.1997 NL 1007541
(71) Applicant: Verfcentrum Waalhaven Europoort B.V., 2984 AX Ridderkerk (NL)
(72) Inventor: Huijsman, Matheus Theodorus, 3351 AX Papendrecht (NL)
(74) Representative: Bakkum, Ruben Joseph

(57) **Abstract**

A description is given of a device (1) for purifying contaminated gas, in particular air which is contaminated with solvent vapour, at least comprising a housing (2) with an inlet (3) for contaminated gas and an outlet (6) for purified gas, and gas-displacement means (15) for forming a flow of gas from the inlet (3) to the outlet (6), the device (1) furthermore comprising at least one container (11) for accommodating an absorption agent, which container (11) is in open communication with the flow of gas in order to deliver gaseous absorption agent to the flow of gas, in the absence of outlet means for used liquid absorption agent. Furthermore, a description is given of a method for purifying contaminated gas, such as air which is contaminated with solvent vapour, in which the contaminated gas is withdrawn from an environment and is brought into contact with the gas or vapour phase of an absorption agent and the resultant gas mixture containing purified gas is then discharged.

## Description

The present invention relates to a device for purifying contaminated gas, in particular air which is contaminated with solvent vapour, at least comprising a housing with an inlet for contaminated gas and an outlet for purified gas, and gas-displacement means for forming a flow of gas from the inlet to the outlet.

A device of this kind is known from EP-A-0,067,422; this device can be used to draw in contaminated air through a filter, after which the filtered air is returned to the environment. Although a device of this nature may be suitable for trapping dust or paint particles, hazardous vapours, such as solvent vapours from, for example, adhesive, paint and varnish, will not be withdrawn from the air, or will scarcely be withdrawn from the air. Furthermore, the contaminating substances remain behind in the filter, with the result that the filter has to be disposed of as special waste (chemical waste) after use.

The object of the present invention is to eliminate the abovementioned drawbacks, and to this end is characterized in that the device furthermore comprises at least one container for accommodating an absorption agent, which container is in open communication with the flow of gas in order to deliver gaseous absorption agent to the flow of gas, in the absence of outlet means for used liquid absorption agent. Used absorption agent is understood to be absorption agent, that has been in contact with the contaminated gas, and wherein absorption of the contaminating substances has taken place.

Providing a container for the said absorption agent allows the absorption agent to be delivered to the flow of gas in the form of a gas, with the result that the contaminating vapours are absorbed in the gas phase. The container is preferably designed to accommodate a liquid absorption agent, and the absorption agent is in liquid form in the container. In such a case, the vapour pressure of the absorption agent is preferably such that a sufficient quantity of absorption agent evaporates from the liquid phase into the flow of gas. Since the absorption agent is therefore slightly volatile, a gas phase of the absorption agent may be formed inside the device, for example in the flow of gas, and the contaminating substances can be absorbed in the gas phase and can be discharged in the gas phase, via the outlet, together with the purified gas.

However, it is also possible to accommodate absorption agents which are in solid form or are bound to a solid substrate in the container, in which case the absorption agent can be taken up into the flow of gas from the said solid phase by means, for example, of evaporation or sublimation. E.g. one or more mats, soaked in the absorption agent may be accomodated in the container(s).

A major advantage of the device according to the present invention lies in the fact that there is no need to provide separate outlet means for liquid absorption agent, because the contaminating particles are absorbed by the absorption agent and are discharged as non-hazardous material in gas phase. Thus, the absorption agent is taken up in the flow of gas, absorbs the contaminating substances in this gas phase and is discharged along with this flow of gas. Therefore, use of the device does not form any waste materials which may have to be discharged as chemical waste. In order to allow the device according to the present invention to work, all that is therefore required, in addition to the power supply needed for the gas-displacement means, is to provide sufficient absorption agent in the container. To this end, feed means for absorption agent may be connected to the container, by means of which the absorption agent can be supplied continuously or periodically from storage containers.

All slightly volatile absorption agents which are able to absorb the contaminating substances in the gas phase may be used as the absorption agent. These include, for example, the volatile absorption agents which are known per se, such as for example the composition which is marketed under the name "Airwick" by the company Reckitt & Colman. Very suitable absorption agents are, in particular, oily liquids which optionally include charged or polar compounds which contain unsaturated carbon bonds, such as for example the compositions which are marketed in the Netherlands under the names Airpur ACP-Neutraal and WKA-Neutraal by the Mepo Productions company of Rotterdam.

In the context of the present application, absorption is understood to include all known absorption methods, including, without implying any limitation, absorption, adsorption, chemical sorption, masking and neutralization. A chemical reaction between the absorption agent and the contaminating substance involved in which the contaminating substance is broken down or at least partially bonded to the absorption agent is also considered to be absorption in the context of this application. In the context of this application, a gaseous absorption agent is considered to mean an absorption agent which is in the form of a gas, a vapour or in atomized form.

Reference is also made to EP-A-0,045,218, which describes a device for removing solvents from air using an absorption liquid such as oil. In the device according to EP-A-0,045,218, the oil is spread over a plurality of surfaces, through which surfaces the solvent-containing air is passed. The solvent is bonded to the oil which is then collected and ultimately has to be disposed of as chemical waste. It is not possible to use the said device to purify solvent-containing air without forming (liquid) waste materials.

US-A-3,528,781 decribes a device for purifying contaminated air, in which air which is drawn up is brought into contact, by means of a contact bed, with a liquid cleaning or neutralization liquid. The neutralization therefore takes place in the liquid phase and leads to the formation of contaminated, used neutralization liquid which has to be treated as chemical waste.

In itself, US-A-3,747,902 describes a device for use in, for example, an air-conditioning installation, from which a deodorant can be released to the air which is moved through the installation. The device has a housing which is provided with inlet and outlet openings and in which deodorant-impregnated rods are accommodated. In contrast to the device according to this invention, only a small proportion of the air fed through the installation is passed through this device, and a small quantity of deodorant is then released to this air, sufficient to impart a certain odour to the air which is discharged. US-A-3,747,902 does not suggest absorption in the sense of this application, whereby substantially all the contaminating substances in the flow of gas are brought into contact with the absorbent agent, and nor is the device suitable for this purpose.

The device according to the invention can be used to purify a gas, for example air, which is contaminated with, for example, hydrogen sulphide, sulphur dioxide, ammonia, chlorine, acetone, styrene, diesel oil, petrol, kerosine and/or standard and modern solvents for varnish and paint, such as benzene, toluene, ethylbenzene, xylene, turpentine, and in particular methyl isobutyl ketone, ethyl acetate, butyl acetate, mesitylene, trimethylbenzene and butyl glycol acetate. When purifying air which has been contaminated as a result of spraying paint, it has been found that the device according to the present invention can be used to purify the air to such an extent that it is no longer possible to detect the presence of solvent constituents in the purified air, measured in the vicinity of the outlet opening of the device. Therefore, in such cases it is not necessary to connect the outlet opening to an outlet duct which guides the purified air to the outside, although it is of course possible to discharge the purified air to the outside air.

In a preferred embodiment, the device does not have a contact bed which is disposed in the flow of gas or other flow-impeding means in which absorption agent is accommodated. In customary air-purifying devices, the air is forced through a contact bed or filter which contains the absorption agent; the absorption of the harmful substances takes place in this bed. In addition to the fact that the absorbed substances have to be removed from the bed in one way or another and cause chemical waste, the flow of air which is moved through the device undergoes considerable resistance when it is to be passed through a bed of this nature. The absence of a contact bed arranged in this manner means that gas-displacement means, such as a relatively low-power fan, are sufficient on their own to achieve a satisfactory purification effect.

In another preferred embodiment of the device according to the present invention, the device comprises filter means upstream of the container. These filter means may comprise one or more filters which are known per se in the prior art, such as active carbon filters, filters made from steel wool, glass wool, plastic or, for example, paper. The advantage of using filter means is the fact that any solid or liquid particles which are present in the gas, such as for example dust, metal grinding dust or paint particles, are already trapped by the filter means. As a result, the absorption agent present in the container is not contaminated, or is contaminated to a lesser extent. If the device is used to purify air which has been contaminated with solvent vapour when spraying paint or varnish, it has proven advantageous to accommodate a number of different filters at a distance from one another in the device, such as for example a combination of a paintstop filter mat, a coarse filter cassette and an absolute filter cassette.

Advantageously, the device also comprises a tubular air-suction arm which can move and pivot with respect to the housing and is connected to the inlet opening of the housing. With the aid of such an air-suction arm, air can be withdrawn from the environment and purified in a very controlled, locally specific manner.

This is advantageous, by way of example, if objects are to be provided with a new layer of paint or varnish only at certain locations and it is not economically viable to move the object into a suitable spray booth. Consideration may be given, in this case, for example, to carrying out paint repairs on trams, trains, aircraft, ships and lorries and the like. The device according to the present invention may also advantageously be used indoors, for example when sticking carpet, spray-painting a radiator or varnishing a parquet floor. The suction arm is directed at the location which is to be treated, so that air which is contaminated with adhesive vapours or paint solvents are drawn up locally through the device according to the present invention. This prevents the adhesive vapours from becoming dispersed throughout the room and, in addition, the person laying the carpet is not, or scarcely, exposed to harmful vapours. Moreover, the device may be used, for example, in the repair and maintenance of aircraft by locally sucking in and purifying kerosine-containing air.

Filter means are preferably positioned at the free end of the air-suction arm, so that the abovementioned particles which are present in the contaminated gas are trapped at the beginning of the flow of gas and cause as little contamination as possible to the suction arm of the device. Furthermore, a design of this nature makes these filter means easy to gain access to for replacement and inspection purposes.

In order to achieve a wide range of possible applications, the device preferably comprises heating means for heating the absorption agent in the container. Depending on its composition, the action of the absorption agent will be optimum within a specific temperature range. The optimum temperature range of such agents generally lies at around 20°C or higher. Therefore, if the device is provided with heating means, the device can be used in rooms which are themselves unheated or not sufficiently heated without reducing the capacity of the absorption agent and hence the action of the device.

The device may be designed as a stationary device, for example as an air-purification installation in a spray booth. One major advantage is that the air which has been purified using the device according to the present invention does not have to be discharged to the outside air, but rather can be returned to the spray booth, so that the temperature inside the spray booth remains constant and supplying fresh air, which generally has to be preheated, is made largely superfluous. Obviously, it is also possible for the purified air to be discharged to the outside air. However, the device is very advantageously of mobile design. The fact that no contaminating compounds, or scarcely any contaminating compounds, can now be detected in the purified air makes it possible to use the device in closed rooms. For example, the device can be used in a tram depot, in an aircraft hangar or in a garage without the areas in question requiring special air-discharge systems. Moreover, the device may be dimensioned in such a manner that it is easy to carry and/or move, so that it can be used in relatively small rooms, for example when laying carpet or spray-painting a radiator, for example, or varnishing parquet. The device may, for example, be made movable with the aid of handles and/or castors which, if desired, may be provided with a brake.

The invention furthermore relates to a method for purifying contaminated gas, in particular air which is contaminated with solvent vapour, the contaminated gas being withdrawn from an environment, and the contaminated gas is brought into contact with the gas or vapour phase of an absorption agent and the resultant gas mixture containing purified gas is then discharged. By bringing the contaminated gas into contact with the gas or vapour phase of the absorption agent, the contaminating compounds are absorbed by the gaseous absorption agent, with the result that the contaminating compounds lose their harmful action. The contaminating compounds are not accumulated or concentrated, but rather are discharged to the environment in a relatively harmless absorbed form. No chemical waste, or scarcely any chemical waste, is formed.

The absorption agent is preferably a liquid, slightly volatile absorption agent. A liquid material is easy to meter and supply. Volatile is understood to mean that sufficient absorption agent passes from the liquid phase into the vapour or gas phase in the flow of gas to absorb the appropriate contaminants in the flow of gas substantially completely. At lower operating temperatures, for example, or in the case of a more quickly moving flow of gas, it is advantageous to select an absorption agent with a suitable higher volatility.

It is possible to convert the liquid absorption agent into the gas form in, for example, a suitable chamber, where it is mixed with the contaminated gas to be purified. Substantially all the gas supplied is passed through this chamber or absorption room.

Generally, the gas is purified sufficiently when the contaminated gas is brought into contact with the liquid absorption agent by providing the liquid absorption agent in open containers and passing the contaminated gas over the open containers, over the liquid phase of the absorption agent. Owing to the fact that the absorption agent is slightly volatile, a certain concentration of gaseous absorption agent, with which the contaminated gas can be brought into contact, will be situated above the absorption agent. As a result of the evaporation of the absorption agent, the volume of this absorption agent in the containers decreases continuously. Absorption agent may be supplied continuously, but it is also possible for the containers to be periodically topped up with absorption agent.

The absorption agent may also be accommodated in solid, optionally porous substrates, from which the absorption agent can evaporate. It is also possible for the absorption agent to be atomized into the flow of gas, in which case it absorbs the contaminating substances in the flow of gas, after which it is discharged together with the flow of gas. During this process, it is possible for the absorption agent to evaporate and therefore to be discharged in the vapour or gas phase.

Advantageously, the purified gas is discharged to the same environment as that from which the contaminated gas is withdrawn. As has already been explained above, the contaminating compounds are generally made harmless by the absorption agent, so that the purified gas, in paricular air, can be returned to the same area without any risk to health. As a result, the method can be carried out in a very flexible manner without being restricted to any particular location.

Advantageously, the contaminated gas is filtered before being brought into contact with the absorption agent, in order not to contaminate the absorption agent unnecessarily with solid or liquid particles which may, for example, dissolve or precipitate in the absorption agent, thus possibly having an adverse effect on the action of the absorption agent.

In an advantageous embodiment of the method according to the present invention, the absorption agent is heated. This ensures that the purification capacity of the absorption agent is not impaired by any relatively cool environment. As a result of the temperature being increased, more absorption agent will evaporate and be available in the flow of gas in order to absorb the contaminating compounds from the contaminated gas, with the result that more contaminated gas can be purified per unit time or more seriously contaminated gas can be purified. A very good purification action is obtained if the absorption agent is heated to a temperature of between 15 and 40°C; optimum purification is obtained in the temperature range between 18 and 28°C, particularly when ACP-neutraal or WKA-neutraal is used as absorption agent.

The invention furthermore relates to an absorption agent which is at least slightly volatile, for use in a device according to the present invention. Slightly volatile absorption agents for removing the odour from unpleasant smelling and contaminating compounds are already known per se to those skilled in the art. However, hitherto absorption agents of this nature have not been used to purify contaminated gas, in particular air which has been contaminated with solvent vapour. Surprisingly, it has been found that absorption agents of this nature, when used in the device according to the present invention, are able to absorb the contaminating compounds to such an extent that it was no longer possible to detect the contaminating compounds at the location of the outlet opening of the said device.

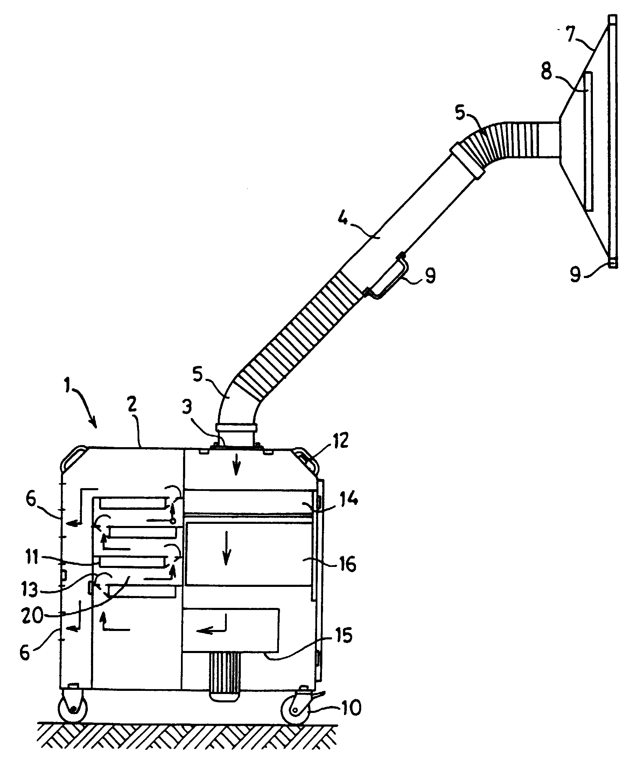

The invention will be explained in more detail below with reference to the drawing and non-limiting examples.

The figure illustrates a partially cut-away side view of an embodiment of the invention. In the figure, the device is denoted by 1. Housing 2 has an inlet opening 3 for contaminated gas, in this case air which has been contaminated with paint solvent. The inlet opening 3 is connected to an air-suction arm 4 which is provided with rotatable and pivotable components 5. The free end of the air-suction arm 4 is connected to a trapezium-shaped frame 7 in which a paintstop filter 8 is accommodated. The suction arm 4 can be placed in any desired position with the aid of handles 9 which are located on frame 7 or on the arm 4.

A fan 15 is positioned in housing 2, which fan provides a flow of air, the direction of which is indicated by arrows. A coarse filter cassette 14 and an absolute filter cassette 16 are accommodated in the housing 2 between the inlet opening 3 and the fan 15. The housing 2 furthermore comprises an absorbtion chamber 20 in which containers 11 for accommodating absorbtion agent are located. The containers 11 are designed as removable drawers made of stainless steel, each drawer being provided with air-deflection means 13 which are designed as a curved stainless-steel strip which is attached to one longitudinal side of the container. The containers 11 may be in communication with heating means (not shown), for example via connectors. Outlet openings of the device are situated on the rear side of the housing 2 and are indicated by 6.

The device is easy to move, owing to the fact that castors 10 are fitted on the housing. Furthermore, indicator lights 12 may be fitted to the housing in order, for example, to indicate a specific level of the absorption agent in the containers 11 or to indicate the level of filling or contamination of the filter cassettes 14 and/or 16.

In operation, the air which has been contaminated with solvent vapour is drawn in by fan 15, with the result that the air firstly passes through paintstop filter 8, where the coarse solid particles are removed from the air. The air which has been prepurified in this way is passed into the housing 2 via the suction arm 4 and through inlet opening 3, and passes through the coarse filter 14 and the absolute filter 16, where the remaining solid and liquid particles can be retained. Then, the entire flow of air is guided into absorption chamber 20, where the flow of air is deflected with the aid of deflection means 13 and is passed over the containers 11. In this case, the deflection means 13 are attached to the containers, although a fixed connection inside the housing is also possible. Above the containers, there is a volume of vapourized absorption agent, by means of which the contaminating compounds situated in the flow of air supplied are absorbed. Then, the contaminating compounds are discharged in the gas phase, via outlet openings 6, in the state in which they have been absorbed by absorption agent and are harmless.

In an embodiment which is eminently suitable for use for purifying air which has been contaminated with solvent vapour, for example as a result of spray-painting, the device according to the present invention has an air-displacement capacity of 2000 m³ per hour, in which case containers 11 have a total evaporation surface area of approximately 0.75 m² and together are able to accommodate a volume of 3 l of absorption agent.

At an absorption agent temperature of 25°C and with the air displacement mentioned above, the consumption of the absorption agent ACP-Neutraal fluctuates between 3 and 5 ml/hour.

### Example 1

A device according to the present invention had the following filter means:
- a paint stop filter mat produced by the Filterservice Heerenveen company in the Netherlands with a surface area of 50 cm², accommodated in a trapezium-shaped frame,
- a coarse filter cassette of type 503051-3GGMHF24245-90, produced by the Camfil company, of dimensions 59 × 59 × 13.5 cm (length × width × height), accommodated in the housing, and
- an absolute filter cassette of type TRSA-1000, produced by the Camfil company, of dimensions 61 × 61 × 29 cm (length × width × height), also accommodated in the housing.

The air-displacement capacity of the device was 2000 m³/h.

The device contained four containers, each measuring 65 × 29 × 5 cm (length × width × height). The containers were filled with 3 l of Airpur ACP-Neutraal, procured from the MEPO Productions company of Rotterdam, the evaporation surface area per container amounting to approximately 0.19 m². The cross-sectional area of the flow of air above each absorption-agent container was approximately 0.05 m².

The device was used to draw in air released when spraying paint onto a surface of 0.5 m². The solvent concentrations of the ready-to-use spray paint employed are shown in the table. The percentages given are percentages by weight, based on the total weight of the ready-to-use spray paint.

**Table**

| Solvent concentrations in the ready-to-use paint employed in Example 1 | |
|---|---|
| Ethylbenzene | 0.8-2.1% by weight |
| Mesitylene | 1-2.5% by weight |
| Butyl acetate | 10-25% by weight |
| Xylene | 0.4-1.7% by weight |
| Ethyl acetate | 8.3-16.7% by weight |
| Hexamethylene diisocyanate | 0.17-1.7% by weight |

Frame 7 was placed at about 25 cm from the spray mist, and the concentration of the solvent particles present in the air was measured at the location of the inlet opening using an Organic Vapour Analyser (OVA). The concentration of the said substances was also measured in this way in the vicinity of the outlet opening of the device, as well as in the breathing zone of the person carrying out the spray-painting. Measurements were also carried out in the absence of the device according to the present invention.

During spray-painting using the device according to the present invention, the total solvent concentration in the air of the breathing zone of the person carrying out the spray-painting was about 1 ppm (parts per million). Immediately downstream of the outlet opening of the device according to the present invention, a maximum of 3 ppm was measured. No vapours were detectable (< 1 ppm) in the immediate vicinity of the object treated. During spray-painting without suction, the vapour concentration in the breathing zone of the person carrying out the spray-painting reached a maximum of 5 ppm, and in the immediate vicinity of the object treated also reached the maximum of 5 ppm.

## Claims

1. Device (1) for purifying a contaminated gas, in particular gas which is contaminated with solvent vapour, using a gaseous absorption agent, at least comprising a housing (2) with an inlet (3) for the contaminated gas and an outlet (6) for purified gas, and gas-displacement means (15) for forming a flow of gas from the inlet (3) to the outlet (6), characterized in that the device (1) furthermore comprises at least one container (11) for accommodating an absorption agent, which container (11) is in open communication with the flow of gas in order to deliver gaseous absorption agent to the flow of gas, in the absence of outlet means for used liquid absorption agent.

2. Device according to claim 1, characterized in that the device (1) comprises filter means (8, 14, 16) upstream of the container.

3. Device according to claim 1 or 2, characterized in that the device (1) furthermore comprises a tubular gas-suction arm (4) which can move and pivot with respect to the housing (2) and is connected to the inlet opening (3) of the housing (2).

4. Device according to one or more of the preceding claims, characterized in that the device (1) comprises heating means for heating the absorption agent in the container (11).

5. Method for purifying contaminated gas, in particular air which is contaminated with solvent vapour, the contaminated gas being withdrawn from an environment, characterized in that the contaminated gas is brought into contact with the gas or vapour phase of an absorption agent and the resultant gas mixture containing purified gas is then discharged.

6. Method according to claim 5, characterized in that the absorption agent is a liquid, slightly volatile absorption agent.

7. Method according to claim 6, characterized in that the contaminated gas is brought into contact with the liquid absorption agent by providing the liquid absorption agent in open containers and passing the contaminated gas over the open containers, over the liquid phase of the absorption agent.

8. Method according to one of claims 5-7, characterized in that the purified gas is discharged to the same environment as that from which the contaminated gas is withdrawn.

9. Method according to one or more of claims 5-8, characterized in that the contaminated gas is filtered before being brought into contact with the absorption agent.

10. Method according to one or more of claims 5-9, characterized in that the absorption agent is heated, preferably to a temperature of between 15 and 40°C, more preferably between 18 and 28°C.
